# EUROPEAN PATENT APPLICATION

(11) **EP 2 063 088 A1**
(43) Date of publication of application: **27.05.2009**
(21) Application number: 07768359.7
(22) Date of filing: 09.07.2007
(51) Int. Cl.: F02D 29/02, B60K 6/445, B60W 10/06, B60W 20/00, F02D 17/00, F02N 11/08

(54) **VEHICLE AND ITS CONTROL METHOD**

(30) Priority: 06.12.2006 JP 2006329844
(71) Applicant: Toyota Jidosha Kabushiki Kaisha, Toyota-shi, Aichi 471-8571 (JP)
(72) Inventor: MORIYA, Kouki, Toyota-shi Aichi 471-8571 (JP)
(74) Representative: TBK-Patent
(86) International application number: PCT/JP2007/063635
(87) International publication number: WO 2008/068921

(57) **Abstract**

When a stop condition for an idle stop is satisfied and an engine is automatically stopped, an operation of the engine is stopped with stop position control to stop the engine at a crank angle position where startability of the engine is good and pre-stop fuel injection control to inject fuel to a cylinder in the first compression stroke in the next start when a shift position SP is a running position such as a D position (S100 and S150), and the operation of the engine is stopped without the stop position control and the pre-stop fuel injection control for providing good startability of the engine when the shift position SP is a non-running position such as a P position or an N position (S100). This allows more proper control according to a state of a vehicle when the operation of the engine is stopped.

## Description

### Technical Field

The present invention relates to a vehicle and a control method of the vehicle.

### Background Art

In a conventionally proposed vehicle of this type, a motor that can output torque to a crankshaft of an engine is controlled when the engine is stopped (for example, see Patent Document 1). In this vehicle, the motor is driven until a detected piston position of a first cylinder reaches a predetermined position in a compression stroke and then the engine is stopped, so as to provide good startability in the next start, when an automatic stop condition of the engine is satisfied.
Patent Document 1: Japanese Patent Laid-Open No. 2005-48626

### Disclosure of the Invention

In the above described vehicle, stop position control of the engine is performed so as to provide good startability in the next start when the engine is stopped and a shift position is in a running position such as a D position and also in a non-running position such as a P position. But, even if the stop position control is performed during parking, a quick start is not required when the engine is next automatically started, and thus torque from a starter generator is output uselessly.

The present invention has an object to provide a vehicle and a control method of the vehicle that performs more proper control according to a state of the vehicle when an operation of an internal combustion engine is stopped.

To achieve the above described object, the vehicle and the control method of the vehicle according to the present invention adopt the following means.

The present invention provides a vehicle including an internal combustion engine that outputs running power, the vehicle including: a torque output module that can output torque to an output shaft of the internal combustion engine; a runnable state detection module that detects that the vehicle is in a runnable state; and a stop time control module. When a predetermined stop condition is satisfied and the runnable state detection module detects that the vehicle is in the runnable state, the stop control module controls the internal combustion engine and the torque output module so as to stop an operation of the internal combustion engine with good startability stop control including control to stop the internal combustion engine at a crank angle position where startability of the internal combustion engine in the next start of the internal combustion engine is good. When the predetermined stop condition is satisfied and the runnable state detection module does not detect that the vehicle is in the runnable state, on the other hand, the stop control module controls the internal combustion engine and the torque output module so as to stop the operation of the internal combustion engine without the good startability stop control.

In the vehicle of the present invention, the internal combustion engine that outputs running power and the torque output module that can output torque to the output shaft of the internal combustion engine are controlled so as to stop the operation of the internal combustion engine with the good startability stop control including the control to stop the internal combustion engine at the crank angle position where startability of the internal combustion engine in the next start of the internal combustion engine is good, when the predetermined stop condition is satisfied and the vehicle is in the runnable state, and the internal combustion engine and the torque output module are controlled so as to stop the operation of the internal combustion engine without the good startability stop control, when the predetermined stop condition is satisfied and the vehicle is not in the runnable state. Thus, the operation of the internal combustion engine is stopped with or without the good startability stop control according to the state of the vehicle, thereby allowing more proper control according to the state of the vehicle when the operation of the internal combustion engine is stopped.

In the vehicle of the invention, the runnable state detection module may detect that the vehicle is in the runnable state when a shift position is a running position, and may detect that the vehicle is not in the runnable state when a parking brake is applied.

In the vehicle of the invention, the stop time control module may perform the good startability stop control to control the internal combustion engine and the torque output module so as to stop the internal combustion engine at a crank angle position within a predetermined range including a top dead center of a cylinder that finishes the final compression stroke in stopping the internal combustion engine. Furthermore, the stop time control module may perform the good startability stop control to control the internal combustion engine so as to inject fuel to a cylinder in the first compression stroke in the next start before a stop of the operation of the internal combustion engine for providing good startability in the next start of the internal combustion engine. This arrangement ensures more satisfactory next start of the engine.

The present invention also provides a control method of vehicle including an internal combustion engine that outputs running power and a torque output module that can output torque to an output shaft of the internal combustion engine, including: when a predetermined stop condition is satisfied and the vehicle is in a runnable state, controlling the internal combustion engine and the torque output module so as to stop an operation of the internal combustion engine with good startability stop control including control to stop the internal combustion engine at a crank angle position where startability of the internal combustion engine in the next start of the internal combustion engine is good, and when the predetermined stop condition is satisfied and the vehicle is not in the runnable state, controlling the internal combustion engine and the torque output module so as to stop the operation of the internal combustion engine without the good startability stop control.

In the control method of the present invention, the internal combustion engine that outputs running power and the torque output module that can output torque to the output shaft of the internal combustion engine are controlled so as to stop the operation of the internal combustion engine with the good startability stop control including the control to stop the internal combustion engine at the crank angle position where startability of the internal combustion engine in the next start of the internal combustion engine is good, when the predetermined stop condition is satisfied and the vehicle is in the runnable state. On the other hand, the internal combustion engine and the torque output module are controlled so as to stop the operation of the internal combustion engine without the good startability stop control, when the predetermined stop condition is satisfied and the vehicle is not in the runnable state. Thus, the operation of the internal combustion engine is stopped with or without the good startability stop control according to the state of the vehicle, thereby allowing more proper control according to the state of the vehicle when the operation of the internal combustion engine is stopped.

In the control method of the invention, it may be determined that the vehicle is in the runnable state when a shift position is a running position, and the vehicle is not in the runnable state when a parking brake is applied, in controlling the internal combustion engine and the torque output module.

In the control method of the invention, the good startability stop control may be performed to control the internal combustion engine and the torque output module so as to stop the internal combustion engine at a crank angle position within a predetermined range including a top dead center of a cylinder that finishes the final compression stroke in stopping the internal combustion engine. Furthermore, the good startability stop control may be performed to control the internal combustion engine so as to inject fuel to a cylinder in the first compression stroke in the next start before a stop of the operation of the internal combustion engine for providing good startability in the next start of the internal combustion engine. This arrangement ensures more satisfactory next start of the engine.

### Brief Description of the Drawings

Fig. 1 is a schematic diagram of a configuration of an automobile 20 as an embodiment of the present invention;
Fig. 2 is a flowchart of an example of a stop time control routine performed by the electronic control unit 40; and
Fig. 3 is a schematic diagram of a configuration of an automobile 20B in one modified structure.

### Best Mode for Carrying Out the Invention

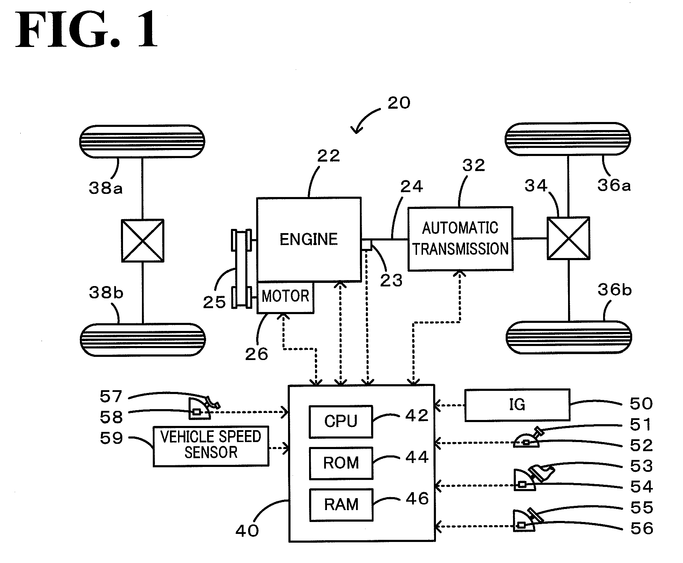

Next, the best mode for carrying out the present invention will be described with an embodiment. Fig. 1 is a schematic diagram of a configuration of an automobile 20 as an embodiment of the present invention. The automobile 20 of the embodiment includes, as shown, an engine 22, an automatic transmission 32 as a stepped transmission or a continuously variable transmission connected to drive wheels 36a and 36b via a crankshaft 24 of the engine 22 and a differential gear 34, a motor 26 that is connected to the crankshaft 24 via a belt 25 and can motor the engine 22, and an electronic control unit 40 that controls the entire vehicle.

The electronic control unit 40 is configured as a microprocessor mainly including a CPU 42, a ROM 44 that stores a processing program, a RAM 46 that temporarily stores data, and unshown input and output ports. To the electronic control unit 40, an ignition signal from an ignition switch 50, a shift position SP from a shift position sensor 52 that detects an operation position of a shift lever 51, an accelerator opening Acc from an accelerator pedal position sensor 54 that detects a depression amount of an accelerator pedal 53, a brake pedal position BP from a brake pedal position sensor 56 that detects a depression amount of a brake pedal 55, on/off signals from a parking brake position sensor 58 that detects depression of a parking brake pedal 57 that locks or unlocks driven wheels 38a and 38b, a vehicle speed V from a vehicle speed sensor 59, signals from various sensors that detect an operation state of the engine 22 such as a crank angle CA from a crank position sensor 23 that detects a rotational position of the crankshaft 24, signals from various sensors that detect a drive state of the motor 26, and signals from various sensors that detect a state of the automatic transmission 32 are inputted via the input port. From the electronic control unit 40, various control signals for performing control such as fuel injection control, ignition control, and intake air amount adjustment control of the engine 22, a drive control signal for driving the motor 26, and various control signals for controlling the automatic transmission 32 are outputted via the output port. In the embodiment, a running position (D position) for running in an advancing direction, a parking position (P position), and a neutral position (N position) are prepared as shift positions SP.

In the automobile 20 of the embodiment thus configured, idle stop control is performed to automatically stop the engine 22 when a stop condition that an accelerator is off and a brake is on is satisfied during an idling operation of the engine 22, and then automatically start the engine 22 when a start condition that the brake is off and the accelerator is on is satisfied.

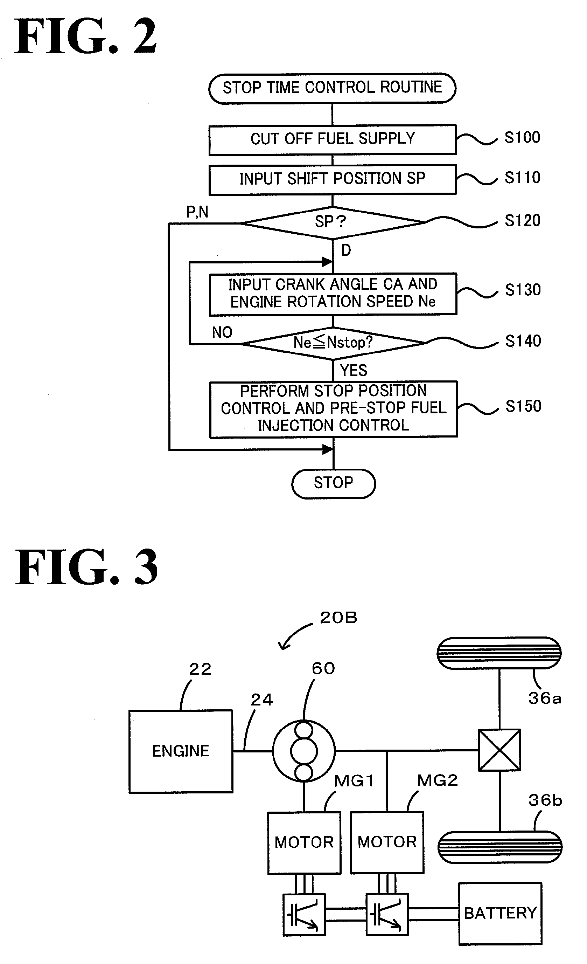

Next, an operation of the automobile 20 of the embodiment thus configured, particularly an operation thereof when the stop condition for the idle stop is satisfied and the engine 22 is automatically stopped will be described. Fig. 2 is a flowchart of an example of a stop time control routine performed by the CPU 42 of the electronic control unit 40. The routine is performed when the stop condition for the idle stop is satisfied.

When the stop time control routine is started, the CPU 42 of the electronic control unit 40 first cut off fuel supply to the engine 22 (Step S100), inputs the shift position SP from the shift position sensor 52 (Step S110), and specifies the inputted shift position SP (Step S120).

When the shift position SP is the running position such as the D position, the crank angle CA of the engine 22 and a rotation speed Ne of the engine 22 calculated on the basis of the crank angle CA are inputted, the inputted rotation speed Ne is waited to reach a threshold Nstop or less as a rotation speed immediately before a stop (Steps S130 and S140), then stop position control is performed to drive the motor 26 so as to stop the engine 22 at a crank angle CA near a top dead center of a cylinder that finishes the final compression stroke in stopping the engine 22 on the basis of the inputted crank angle CA, and pre-stop fuel injection control is performed to inject fuel to a cylinder in the first compression stroke in the next start of the engine 22 before the stop of the engine 22 (Step S150), and the routine is finished. In the embodiment, the threshold Nstop used is previously calculated by an experiment as a rotation speed of the engine 22 when the crankshaft 24 rotates one more turn and stops (for example, 200 rpm or 300 rpm). As such, when the vehicle is in the runnable state, the operation of the engine 22 is stopped with the stop position control and the pre-stop fuel injection control, thereby allowing good startability in the next start of the engine 22. This is based on the fact that the stop position control can increase an initial rotation speed of the crankshaft 24 in the next start, and the pre-stop fuel injection control causes explosion in the first ignition timing in the next start to allow a quick start.

When the shift position SP is a non-running position such as the P position or the N position in Step S120, the routine is finished without performing the stop position control and the pre-stop fuel injection control of the engine 22. As such, the operation of the engine 22 is stopped without performing the stop position control and the pre-stop fuel injection control of the engine 22 when the vehicle is not in the runnable state, because a quick start is not essentially required in automatically starting the engine 22 during an idle stop, for example, in a parking lot or in a stop state at a red light, and driving the motor 26 by the stop position control and fuel injection by the pre-stop fuel injection control become useless. Thus, when the vehicle is not in the runnable state, unnecessary control is not performed. This allows more proper control according to the state of the vehicle when the operation of the engine 22 is stopped.

With the automobile 20 of the embodiment described above, when the stop condition for the idle stop is satisfied and the engine 22 is automatically stopped, the operation of the engine 22 is stopped with the control such as the stop position control to provide good startability of the engine 22 when the shift position SP is the running position, and without the control to provide good startability of the engine 22 when the shift position SP is the non-running position, thereby allowing more proper control according to the state of the vehicle when the operation of the engine 22 is stopped. Also, when the shift position SP is the running position, the stop position control of the engine 22 is performed to drive the motor 26 so as to stop the engine 22 at the crank angle CA near the top dead center of the cylinder that finishes the final compression stroke in stopping the engine 22, and further the pre-stop fuel injection control is performed to inject fuel to the cylinder in the first compression stroke in the next start of the engine 22 before the stop of the engine 22, thereby allowing a more satisfactory next start of the engine 22.

In the automobile 20 of the embodiment, the control to provide good startability of the engine 22 is not performed when the shift position SP is the non-running position. However, in addition to or instead of the condition of the shift position SP, it is allowed that the control to provide good startability of the engine 22 is not performed when the parking brake pedal 57 is depressed and on, or the control to provide good startability of the engine 22 is not performed when any of doors of the vehicle is open irrespective of the condition of the shift position SP or on/off of the parking brake pedal 57.

In the automobile 20 of the embodiment, the stop position control and the pre-stop fuel injection control are performed as the control to provide good startability of the engine 22 when the shift position SP is the running position. However, the stop position control only may be performed as the control to provide good startability of the engine 22 without performing the pre-stop fuel injection control.

In the automobile 20 of the embodiment, the motor 26 is driven to perform the stop position control of the engine 22, but the stop position of the engine 22 may be controlled by fuel injection control, ignition control, and intake air amount adjustment control of the engine 22.

In the embodiment, the present invention is applied to the automobile 20 that outputs power from the engine 22 to the drive wheels 36a and 36b via the automatic transmission 32 and runs, but as illustrated by a hybrid vehicle 20B of a modified structure in Fig. 3, the present invention may be applied to a hybrid vehicle that outputs power from an engine 22 and a motor MG1 via a planetary gear mechanism 60 and power from a motor MG2 to drive wheels 36a and 36b and runs.

Now, correspondence between essential elements in the embodiment and essential elements in the invention described in Disclosure of the Invention will be described. In the embodiment, the engine 22 that outputs power to the drive wheels 36a and 36b corresponds to "internal combustion engine", the shift position sensor 52 that detects the shift position SP corresponds to "runnable state detection module", the motor 26 that can motor the engine 22 corresponds to "torque output module", and the electronic control unit 40 that performs the processings in Steps S100 to S150 to stop the operation of the engine 22 with or without the control to provide good startability of the engine 22 such as the stop position control according to the shift position SP when the stop condition for the idle stop is satisfied corresponds to "stop time control module". For the correspondence between the elements in the embodiment and the elements in the invention described in Disclosure of the Invention, the elements in the embodiment do not limit the elements in the invention described in Disclosure of the Invention since the embodiment is an example for describing in detail the best mode for carrying out the invention described in Disclosure of the Invention. Specifically, the invention described in Disclosure of the Invention should be construed on the basis of the description therein, and the embodiment is merely a detailed example of the invention described in Disclosure of the Invention.

The above-described embodiment regards the automobile 20, however, the technique of the present invention is also applicable to a vehicle other than an automobile, such as a train, and may be actualized as a control method for a vehicle, such as an automobile and a train.

The embodiment and its modified examples discussed above are to be considered in all aspects as illustrative and not restrictive. There may be many other modifications, changes, and alterations without departing from the scope or spirit of the main characteristics of the present invention.

### Industrial Applicability

The present invention is applicable to, for example, manufacturing industries of vehicles.

## Claims

1. A vehicle including an internal combustion engine that outputs running power, said vehicle comprising:
a torque output module that can output torque to an output shaft of said internal combustion engine;
a runnable state detection module that detects that the vehicle is in a runnable state; and
a stop time control module that, when a predetermined stop condition is satisfied and said runnable state detection module detects that the vehicle is in the runnable state, controls said internal combustion engine and said torque output module so as to stop an operation of said internal combustion engine with good startability stop control including control to stop said internal combustion engine at a crank angle position where startability of said internal combustion engine in the next start of said internal combustion engine is good, and when said predetermined stop condition is satisfied and said runnable state detection module does not detect that the vehicle is in the runnable state, controls said internal combustion engine and said torque output module so as to stop the operation of said internal combustion engine without said good startability stop control.

2. A vehicle according to claim 1, wherein said runnable state detection module detects that the vehicle is in the runnable state when a shift position is a running position.

3. A vehicle according to claim 1, wherein said runnable state detection module detects that the vehicle is not in the runnable state when a parking brake is applied.

4. A vehicle according to claim 1, wherein said stop time control module performs said good startability stop control to control said internal combustion engine and said torque output module so as to stop said internal combustion engine at a crank angle position within a predetermined range including a top dead center of a cylinder that finishes the final compression stroke in stopping said internal combustion engine.

5. A vehicle according to claim 1, wherein said stop time control module performs said good startability stop control to control said internal combustion engine so as to inject fuel to a cylinder in the first compression stroke in the next start before a stop of the operation of said internal combustion engine for providing good startability in the next start of said internal combustion engine.

6. A control method of vehicle including an internal combustion engine that outputs running power and a torque output module that can output torque to an output shaft of said internal combustion engine, comprising:
when a predetermined stop condition is satisfied and the vehicle is in a runnable state, controlling said internal combustion engine and said torque output module so as to stop an operation of said internal combustion engine with good startability stop control including control to stop said internal combustion engine at a crank angle position where startability of said internal combustion engine in the next start of said internal combustion engine is good, and when said predetermined stop condition is satisfied and the vehicle is not in the runnable state, controlling said internal combustion engine and said torque output module so as to stop the operation of said internal combustion engine without said good startability stop control.

7. A control method according to claim 6, wherein it is determined that the vehicle is in the runnable state when a shift position is a running position, and it is determined that the vehicle is not in the runnable state when a parking brake is applied, in controlling said internal combustion engine and said torque output module.

8. A control method according to claim 6, wherein said good startability stop control is performed to control said internal combustion engine and said torque output module so as to stop said internal combustion engine at a crank angle position within a predetermined range including a top dead center of a cylinder that finishes the final compression stroke in stopping said internal combustion engine.

9. A control method according to claim 6, wherein said good startability stop control is performed to control said internal combustion engine so as to inject fuel to a cylinder in the first compression stroke in the next start before a stop of the operation of said internal combustion engine for providing good startability in the next start of said internal combustion engine.
